# EUROPEAN PATENT SPECIFICATION

(11) **EP 0 728 411 B1**
(45) Date of publication and mention of the grant of the patent: **26.07.2000**
(21) Application number: 96200336.4
(22) Date of filing: 13.02.1996
(51) Int. Cl.: A01J 5/017, A01J 5/08

(54) **An implement for milking animals**
Vorrichtung zum Melken von Tieren
Dispositif de traite d'animaux

(30) Priority: 15.02.1995 NL 9500276; 15.02.1995 NL 9500277
(43) Date of publication of application: 28.08.1996
(60) Divisional application: 00200172.5
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 611 004

## Description

The present invention relates to an implement for milking animals, such as cows, comprising means adapted to carry teat cups and means for bringing each of the teat cups under a teat of an animal and moving same upwardly.

Such implements are known, e.g. from EP-A-0 611004, and have the disadvantage that, when an animal has teats situated very close to each other and a teat cup is already connected to one of said teats, the teat cup to be connected thereafter may be blocked in its upward movement or at least be hampered by the teat cup already connected. The invention aims to obviate this problem.

According to the invention, the above-mentioned implement is characterized in that the teat cups are provided with guide means for the purpose of leading a teat cup during its upward movement sidewardly in such a way that the teat cup will not be hampered in its upward movement by a teat cup being already connected to the animal.

The application of the invention is particularly important in an implement comprising a milking robot with a robot arm able to carry teat cups, which teat cups can be automatically connected to the teats of an animal and are provided with an extension piece surrounding at least part of the teat cups, by means of which extension piece a teat cup can be seized in order to be moved upwardly.

In a further embodiment, the extension piece surrounding at least part of a teat cup may comprise a downwardly extending edge, while the guide means disposed therebelow are provided with an upwardly sloping conical edge. This conical edge extends preferably upwards through an angle amounting from 20° to 40°. As the teat cups, after having been disconnected from the teats, may arrive on the robot arm pivoted about their own axis, it is advantageous when both the extension piece and the guide means are provided around the teat cup. The distance between the extension piece and the guide element is preferably such that a teat cup being moved upwards along the guide means of a teat cup already connected to a teat is subjected to such an external force that the upper side of the teat cup, in its vertical movement, cannot hit the teat cup already connected before having passed the extension piece of the latter teat cup.

For a better understanding of the invention and to show how the same may be carried into effect, reference will now be made, by way of example, to the accompanying drawings, in which:
Figure 1 shows, in side view, an implement for automatically milking animals according to the invention;

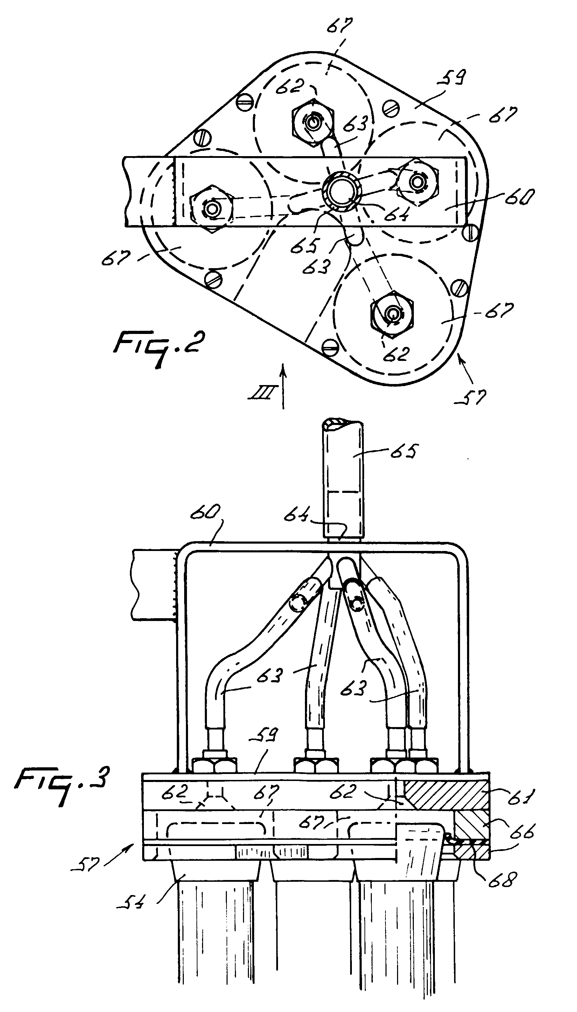

Figure 2 shows, in plan view, part of the implement shown in Figure 1, in particular the cleaning member;
Figure 3 is a partial side view of the cleaning member;
Figure 4 shows, in plan view, the end of the robot arm including the teat cups and the lever element for these cups, and
Figure 5 shows, in side view, two teat cups and the lever element during the connection of a teat cup to a teat situated immediately next to one to which a teat cup has already been connected.

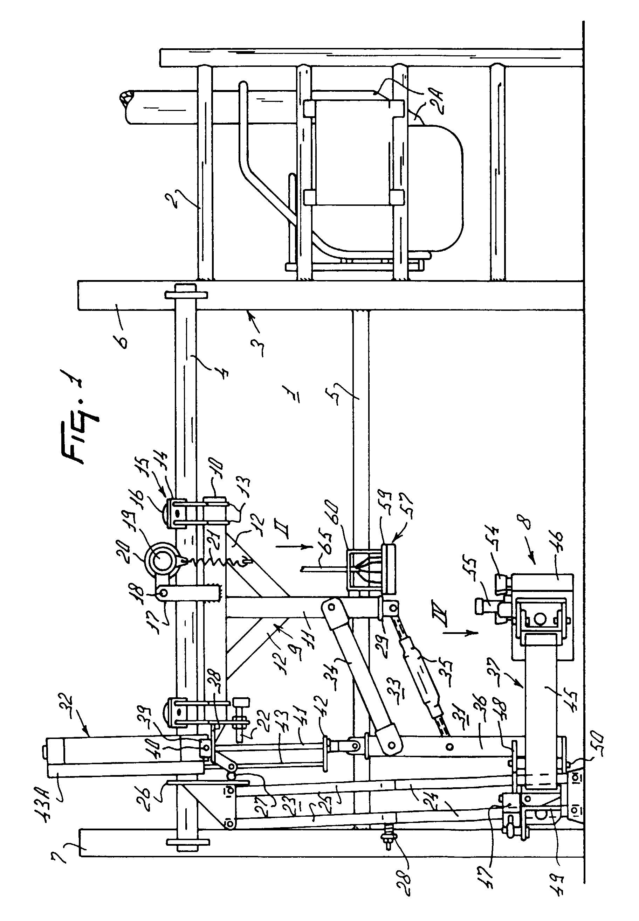

The implement as shown in Figure 1 comprises a milking parlour 1 surrounded by a fencing 2 allowing the animal a limited freedom of movement and being provided with an automatically operating feeding installation 2A. The animal can enter the milking parlour via a longitudinal side near the rear thereof and leave same via the same longitudinal side near the front thereof. The front side of the milking parlour being provided with a feeding installation, the cow will advance sufficiently far and will come into a position in which it can be milked easily. At the other longitudinal side of the milking parlour, being opposite to the one including the entrance and exit, there is provided a fixed frame 3 constituting part of the fencing 2, which frame 3 includes a first frame part 4 and a second frame part 5. The first frame part 4 extends parallel to the second frame part 5 and is situated substantially thereabove. The first frame part 4 is fixed to the outside of two vertical stands 6 and 7 constituting part of the fencing 2, while the second frame part 5 is fixed therebetween. To the first frame part 4, there is movably attached a milking robot 8 for automatically connecting teat cups to the teats of the animals to be milked, respectively disconnecting same therefrom, while this milking robot is supported against the second frame part 5 disposed at such a height that the arms of the milking robot 8 are movable therebelow under the cow present in the milking parlour. The milking robot 8 comprises a carrier frame 9 for its further parts. By designing the upper frame part 4 as a rail, the carrier frame 9, and consequently the entire milking robot 8, can easily be moved along this frame part. The carrier frame 9 includes a beam 10 extending substantially parallel to the first frame part 4, a beam 11 directed vertically downwardly perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a rollers pair 15, in such a way that the carrier frame 9 is suspended easily movably along the upper frame part 4, therebelow. On the beam 10 of the carrier frame 9, on both sides, there are provided two carriers 17, to which there is attached a motor 19 movable about a pivot shaft 18. By this motor 19 there is driven a roller 20, preferably having a rubber surface, which roller is pushed against the upper frame part 4 by means of a spring member 21. The spring member 21 being active between the motor 19 and the carrier frame 9, the roller 20 to be driven by the motor 19 is kept pushed against the upper frame part 4, so that, when the motor is driven, it will be moved along the upper frame part 4 and, consequently, the entire carrier frame 9 will be moved. To the supporting member 13 which, relative to the milking parlour, is situated rearmost, there is attached a sensor 22 comprising e.g. a laser. By means of this sensor 22, it is possible to guide the milking robot, in the longitudinal direction of the milking parlour, from an inoperative position to a starting position, in which the milking robot arms are moved under the animal present in the milking parlour, and to follow the movements of the animal in the longitudinal direction thereof. For that purpose, the sensor 22 cooperates with a supporting member 23 which is movable against the rear side of the animal. By means of a rod system which, in the present embodiment, is constituted by a quadrangle construction and, in particular, by a parallellogram construction 24, this supporting member 23 is arranged on the milking parlour floor pivotably relative thereto. By means of two rods 25, the supporting member 23 is provided with a plate 26, extending sidewards outside the frame parts 4, 5 which plate 26 is arranged so as to be able to reflect a signal transmitted by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milking parlour in such a way that the distance between the plate 26 and the sensor 22 is brought, respectively maintained, at an adjusted value. In its inoperative position, the milking robot 8 has been moved as rearwardly as possible relative to the frame parts 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milking parlour, the milking robot is guided from this inoperative position to the starting position, in which its arms are moved under the animal present in the milking parlour, then the supporting member 23 is dislocked and, by means of a spring 28 disposed between the parallellogram construction 24 and the fencing 2, is pushed under spring pressure against the rear side of the relevant animal. Upon a forward or backward movement of the cow, under pressure of the spring 28, the supporting member 23 will always be kept against the rear side of the animal, so that the position of the plate 26 determines that of the animal in the longitudinal direction of the milking parlour and, by means of the sensor 22, while maintaining the distance in longitudinal direction between the plate 26 and the sensor 22, the milking robot can follow the movements of the cow in the longitudinal direction of the milking parlour. In the present embodiment, the beam 11 of the carrier frame 9 extends vertically downwardly to somewhat below the second frame part 5. At the lower side of this beam 11, there is disposed a horizontal, rearwardly extending strip 29 which is provided with a (non-shown) freely rotatable roller element. The lower frame part 5 is constituted by a rail, in particular one designed as a U-shaped beam, while the latter freely rotatable roller element is arranged in such a way that it is movable between the two upright edges of the U-shaped beam. In this manner, the milking robot 8 is supported against the lower frame part 5 and, when being moved by means of the motor over the first frame part 4, can easily move along the second frame part 5. Besides the carrier frame 9, the milking robot comprises a robot arm construction 31 which, by means of a control cylinder 32, is movable substantially vertically relative to the carrier frame 9. By means of a quadrangle construction 33, the robot arm construction 31 is movably connected with the carrier frame 9. In the embodiment shown, the upper arm 34 of this quadrangle construction 33 has a fixed length, while the lower arm 35 thereof is adjustable in length so as to enable the robot arm construction 31 to be adjusted to a limited extent. The robot arm construction 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the present embodiment, the control cylinder is designed as a servo-pneumatic positioning cylinder. This means that, at the lower end of the piston rod 41, by means of a plate 42 fixed thereto, there is attached a position feedback rod 43, by means of which, in a part 43A of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm construction 31 to be moved into its lowest position, as soon as the animal present in the milking parlour exercises a pressure thereon, e.g. by kicking. Figure 1 shows the milking robot 8 in its inoperative position, in which it has been moved as rearwardly as possible and the robot arm construction 31 has been brought nearest possible to the soil. When a cow is present in the milking parlour and the milking process is to be started, the milking robot 8 is brought from its inoperative position into the starting position, i.e. into the position wherein the arms of the milking robot 8 can be moved to under the cow.

In the present embodiment, for that purpose, the milking robot includes a number of arms, of which only the arms 45 and 46 are shown in Figure 1. Two of them, among which the arm 45, are arranged at a fixed angle of 90° relative to each other. Therefore, the latter arms are moved together, i.e. by a control cylinder 47 provided between a supporting plate 48 attached to the robot arm 36 and a connecting piece 49 disposed between the two latter arms. The two latter arms are pivotable about a substantially vertical pivot shaft 50 between the supporting plate 48 and a supporting plate 50, which latter is also rigidly connected to the robot arm 36, more in particular at the lower end thereof. A further arm 46 is pivotable relative to the arm 45 about a substantially vertical pivot shaft and is pivoted relative thereto by means of a control cylinder disposed between the arm 46 and the end of the arm 45 that is situated near thereto. Near the end of the arm 46 there are provided the teat cups 53 and 54 to be connected to the teats of the cow. Between the two teat cups 54 there is disposed a sledge, which is movable on the arm 46 and on which there is provided a sensor 55, which by a sectorwise scanning movement can accurately determine the position of the teats, so that the control cylinders of the robot arm construction can be computer-controlled in such a way that the teat cups will be connected properly to the teats. The robot arms having been brought to under the cow, they are in a relatively low position, in which the sensor 55 will not yet detect teats. By means of the control cylinder 32, the robot arms are raised stepwise until the sensor 55 detects one or more teats of the animal. When it is known from the data concerning the cows that a relevant animal has relatively long teats, the steps by which the sensor 55 is moved upwards may be larger. The detection of the teats is then effected at a higher rate. When the teats, as to their lengths, are divided into two categories, two detection rates can be applied. As soon as a teat has been detected, the detection turn, i.e. the stepwise upward movement of the sensor, can be stopped. When, for some reason or another, during the upward movement the sensor is raised to such a height that the upper side thereof pushes against the cow's abdomen, then, by means of a switch provided on the upper side of the sensor 55, a downward movement of the robot arms can be effected, whereafter, by means of the sensor 55, while again stepwise raising the robot arms, the determination of the position of the teats can be repeated.

For the purpose of cleaning the teat cups 53 and 54 and possibly the milk circuit connected thereto, the above-described implement is furthermore provided with a cleaning member 57, which is fixed to a carrier 59 connected to the beam 11 by means of a support 60.

The implement shown in Figure 1 is provided in a customary manner with a (non-shown) rinsing circuit. This rinsing circuit is constituted by a rinsing fluid reservoir, a rinsing fluid supply line connected thereto guiding to the cleaning member 57, while the rinsing circuit is constituted furthermore by the parts of the implement that, during rinsing, are connected to the cleaning members, i.e. the teat cups 53 and 54, the milk lines connected thereto and a milk glass into which these milk lines debouch. The discharge from the milk glass is provided in a customary manner with a pump and a cock for the purpose of guiding the milk, during milking, to a milk tank and, during rinsing the teat cups, the milk lines connected thereto and the milk glass, guiding the cleaning fluid back to the rinsing fluid reservoir. Such a rinsing circuit is known from European patent application 0385539.

The cleaning member 57 comprises a plate 61 arranged below the carrier 59, which plate 61 comprises four boreholes extending also through the carrier 59 and conically widening downwardly. These boreholes will hereafter be designated as cleaning fluid supply nozzles. At the upper side of the carrier 59, there are connected four supply lines 63 to these cleaning fluid supply nozzles 62, which vertically debouch into a collection piece 64 that is fixed to the support 60. To the collection piece 64 there is connected a rinsing fluid supply line 65. The cleaning member 57 furthermore includes a plate 66 disposed under the plate 61, which plate 66 is provided with four, preferably round, recesses 67 whose diameter is such that into each of these recesses 67 the upper end of a teat cup 53, 54 can be inserted. Thus, each of the recesses 67 constitutes a housing for the upper part of a teat cup. Into each of these housings a cleaning fluid supply nozzle 62 debouches. In a particular embodiment, each of the four housings near the lower side is provided with a closing element, such as a rubber or synthetic closing ring 68 which, when a teat cup is brought into a housing, closes the housing around the upper end of the teat cup. Consequently, a cleaning fluid that is brought through the rinsing fluid supply line 65 and the separate lines 63 via the cleaning fluid supply nozzles 62 into the separate housings, will fill each of these housings, while the cleaning fluid is discharged therefrom via the teat space of the teat cup and the milk line connected thereto. When there is maintained some distance between the discharge opening of the cleaning fluid supply nozzles 62 and the upper side of the teat cups, not only the teat cups will be cleaned internally, but also their surface will be rinsed. The desired distance adjustment between the upper side of the teat cups, when these have been brought into the respective housings of the cleaning member 57 and the debouching point of the cleaning fluid supply nozzles 62 in these housings is obtained by means of the robot arm 46 which is adjustable in height, on which robot arm 46 there are provided the teat cups 53, 54. Upon the upward movement of the robot arm 46 it is essential that the teat cups can immediately be inserted into the housings of the cleaning member 57. The mutual positioning of the recesses in the plate 66 will therefore correspond to the mutual positioning of the teat cups 53, 54 on the end of the robot arm 46. In a preferred embodiment, it will be possible that the teat cups, supported by the robot arm, are brought into the respective housings up to a distance of approximately 2 to 10 mm from the relevant cleaning fluid supply nozzles 62.

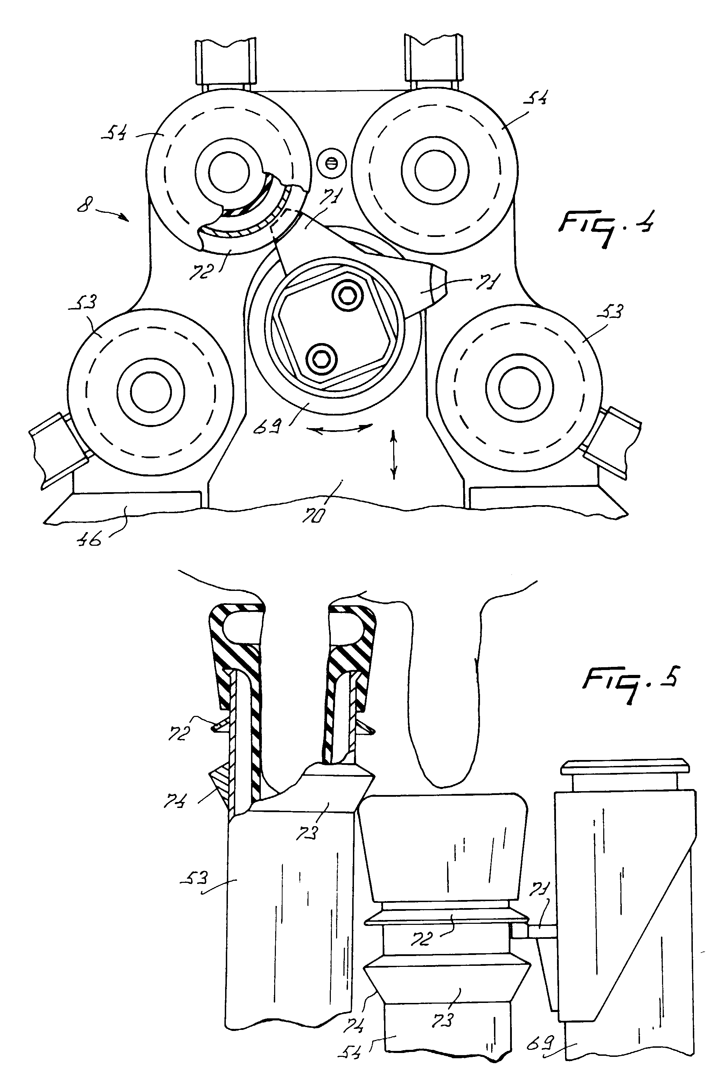

As mentioned before, the teat cups 53 and 54 are disposed on the end of the robot arm 37. For the purpose of being able, when a teat cup has been brought under a teat of an animal to be milked, to move this teat cup upwards in order to connect same to the teat, there is provided a seizing element 69. This element consists of two parts movable in height relative to each other, while the mutual movement of these parts is effected pneumatically, hydraulically or electrically. The element 69 is situated between the four teat cups 53, 54 on a sledge 70 which, in the longitudinal direction of the robot arm 46, is adjustable in two positions in such a way that by means of a reciprocating movement of the sledge 70 and a rotating movement of the element 69, each of the teat cups 53, 54 can be seized. For that purpose the seizing element 69 is provided with an edge 71 projecting sidewards and upwards which, when the element 69 has been brought into the right position, engages under an extension piece 72 at the outside of a teat cup. In the embodiment shown in Figure 4, the sidewards and upwards projecting edge 71 of the element 69 is shaped in such a way that in each of the two positions of the sledge 70, only by a slight rotation, one of the cups can be seized. In the embodiment shown the extension piece 72 is provided around the teat cups. Although the extension piece 72 only needs to be provided, of course, over a certain sector, it will be advantageous to provide this extension piece on all sides, as it is never quite certain that, after having been disconnected, a cup pivoted about its longitudinal axis will arrive on the end of the robot arm. Under the extension piece 72, each teat cup is provided with guide means 73. These guide means 73 are constituted by a ring, preferably provided on extension piece 72 at such a distance that the engagement of a teat cup by means of the sidewards and upwards projecting edge 71 to the seizing element 69 is not hampered. The ring-shaped guide element 73 has a conical, upwardly sloping edge 74. This edge extends at an angle amounting from 20° to 40°, preferably of approximately 30°.

Figure 5 shows the situation in which a teat cup is connected to a teat of an animal to be milked, while a second teat cup still has to be connected to a teat situated very close next to it. When this second teat cup is seized by the element 69 and moved upwards in the absence of the guide means 73, then, the upper edge of the second teat cup to be moved upwards would hit the extension piece 72 of the already connected first teat cup if (as is indicated in Figure 5) the teats of this animal are situated very close to each other. Because of this the upward movement of the second teat cup would be hampered, which might even result into an unsuccessful connection of the teat cup. However, by the presence of the guide means 73, upon moving the second teat cup upwards directly next to the already connected first teat cup, the second teat cup is guided sidewards along the upwardly sloping edge 74 of the guide means 73, whereafter, by the upward speed of the teat cup, the upper side thereof can only hit the already connected first teat cup after having passed the extension piece 72 of the connected first teat cup. On the one hand, the distance between the extension piece 72 and the guide means 73 has to be such that the engagement of the teat cup by means of the sidewards and upwards projecting edge 71 remains possible, while on the other hand the teat cup upon moving upwards along an already connected teat cup has to describe such an orbit that the latter teat cup can no longer be hampered in its upward movement by the extension piece 72 of the already connected teat cup and the automatic connection of the teat cup is not rendered impossible or at least is hindered.

## Claims

1. An implement for milking animals, such as cows, comprising means adapted to carry teat cups (53, 54) and means for bringing each of the teat cups (53, 54) under a teat of the animal and moving same upwardly, characterized in that the teat cups (53, 54) are provided with guide means (73) for the purpose of leading a teat cup (53, 54) during its upward movement sidewardly in such a way that the teat cup (53, 54) will not be hampered in its upward movement by a teat cup (53, 54) being already connected to the animal.

2. An implement as claimed in claim 1, characterized in that the implement comprises a milking robot with a robot arm able to carry teat cups, which teat cups can be automatically connected to the teats of an animal and are provided with an extension piece (72) surrounding at least part of the teat cups (53, 54), by means of which extension piece (72) a teat cup can be seized in order to be moved upwardly.

3. An implement as claimed in claim 2, characterized in that the extension piece (72) surrounding at least part of a teat cup (53, 54) comprises a downwardly extending edge, while the guide means (73) disposed therebelow are provided with an upwardly sloping conical edge (74).

4. An implement as claimed in claim 3, characterized in that the conical edge (74) extends preferably upwards through an angle amounting from 20° to 40°.

5. An implement as claimed in any one of the preceding claims, characterized in that both the extension piece (72) and the guide means (73) are provided around a teat cup (53, 54).

6. An implement as claimed in any one of the preceding claims, characterized in that the distance between the extension piece (72) and the guide means (73) of a teat cup is such that a teat cup (53, 54) being moved upwards along the guide means (73) of a teat cup already connected to a teat is subjected to such an external force that the upper side of the teat cup (53, 54), in its vertical movement, cannot hit the teat cup already connected before having passed the extension piece (72) of the latter teat cup.

## Patentansprüche

1. Vorrichtung zum Melken von Tieren, wie z. B. Kühen, mit einer Vorrichtung zum Tragen von Zitzenbechern (53, 54) und einer Vorrichtung zum Befördern jedes Zitzenbechers (53, 54) unter eine Zitze des Tieres sowie zum Bewegen desselben nach oben,
dadurch gekennzeichnet, daß die Zitzenbecher (53, 54) eine Führungsvorrichtung (73) aufweisen, um einen Zitzenbecher (53, 54) während seiner Aufwärtsbewegung derart seitwärts zu führen, daß der Zitzenbecher (53, 54) nicht durch einen bereits an das Tier angeschlossenen Zitzenbecher (53, 54) in seiner Aufwärtsbewegung behindert wird.

2. Vorrichtung nach Anspruch 1,
dadurch gekennzeichnet, daß die Vorrichtung einen Melkroboter mit einem Roboterarm aufweist, der sich zum Tragen von Zitzenbechern eignet, die automatisch an die Zitzen eines Tieres anschließbar und mit einem Erweiterungsstück (72) versehen sind, das die Zitzenbecher (53, 54) zumindest teilweise umgibt, und mittels dessen ein Zitzenbecher zum Zwecke der Aufwärtsbewegung ergreifbar ist.

3. Vorrichtung nach Anspruch 2,
dadurch gekennzeichnet, daß das einen Zitzenbecher (53, 54) zumindest teilweise umgebende Erweiterungsstück (72) einen nach unten gerichteten Rand aufweist, während die darunter angeordnete Führungsvorrichtung (73) einen schräg aufwärts verlaufenden konischen Rand (74) aufweist.

4. Vorrichtung nach Anspruch 3,
dadurch gekennzeichnet, daß sich der konische Rand (74) vorzugsweise in einem Winkel von 20° bis 40° nach oben erstreckt.

5. Vorrichtung nach einem der vorhergehenden Ansprüche, dadurch gekennzeichnet, daß sowohl das Erweiterungsstück (72) als auch die Führungsvorrichtung (73) um einen Zitzenbecher (53, 54) herum angeordnet sind.

6. Vorrichtung nach einem der vorhergehenden Ansprüche, dadurch gekennzeichnet, daß der Abstand zwischen dem Erweiterungsstück (72) und der Führungsvorrichtung (73) eines Zitzenbechers so bemessen ist, daß ein Zitzenbecher (53, 54), der entlang der Führungsvorrichtung (73) eines bereits an eine Zitze angeschlossenen Zitzenbechers nach oben bewegt wird, einer solchen externen Kraft unterworfen ist, daß der obere Teil des Zitzenbechers (53, 54) bei seiner vertikal verlaufenden Bewegung nicht auf den bereits angeschlossenen Zitzenbecher auftreffen kann, bevor er nicht das Erweiterungsstück (72) dieses Zitzenbechers passiert hat.

## Revendications

1. Installation pour traire des animaux, tels que des vaches, comportant des moyens adaptés pour supporter des gobelets trayeurs (53, 54) et des moyens pour amener chacun des gobelets trayeurs (53, 54) sous un trayon d'un animal et déplacer celui-ci vers le haut, caractérisée en ce que les gobelets trayeurs (53, 54) sont munis de moyens de guidage (73) dans le but d'amener un gobelet trayeur (53, 54) pendant son déplacement vers le haut dans une direction latérale de manière telle que le gobelet trayeur (53, 54) ne va pas être gêné dans son mouvement vers le haut par un gobelet trayeur (53, 54) qui est déjà connecté à l'animal.

2. Installation selon la revendication 1, caractérisée en ce que l'installation comporte un robot de traite ayant un bras de robot capable de supporter des gobelets trayeurs, lesquels gobelets trayeurs peuvent être connectés automatiquement aux trayons d'un animal et sont munis d'une partie d'agrandissement (72) entourant une partie des gobelets trayeurs (53, 54), partie d'agrandissement (72) par l'intermédiaire de laquelle un gobelet trayeur peut être saisi afin d'être déplacé vers le haut.

3. Installation selon la revendication 2, caractérisée en ce que la partie d'agrandissement (72) entourant au moins une partie d'un gobelet trayeur (53, 54) comporte un bord s'étendant vers le bas, alors que les moyens de guidage (73) disposés en dessous de celle-ci sont munis d'un bord conique en pente vers le haut (74).

4. Installation selon la revendication 3, caractérisée en ce que le bord conique (74) s'étend de préférence vers le haut selon un angle allant de 20° à 40°.

5. Installation selon l'une quelconque des revendications précédentes, caractérisée en ce qu'à la fois la partie d'agrandissement (72) et les moyens de guidage (73) sont agencés autour d'un gobelet trayeur (53, 54).

6. Installation selon l'une quelconque des revendications précédentes, caractérisée en ce que la distance entre la partie d'agrandissement (72) et les moyens de guidage (73) d'un gobelet trayeur est telle qu'un gobelet trayeur (53, 54) qui est déplacé vers le haut le long des moyens de guidage (73) d'un gobelet trayeur déjà connecté à un trayon est soumis à une force extérieure telle que le côté supérieur du gobelet trayeur (53, 54), dans son mouvement vertical, ne peut pas heurter le gobelet trayeur déjà connecté avant d'avoir dépassé la partie d'agrandissement (72) de ce dernier gobelet trayeur.
